# EUROPÄISCHE PATENTSCHRIFT

(11) **EP 0 524 969 B1**
(45) Veröffentlichungstag und Bekanntmachung des Hinweises auf die Patenterteilung: **28.06.1995**
(21) Anmeldenummer: 91906788.4
(22) Anmeldetag: 22.03.1991
(51) Int. Cl.: C08B 37/16

(54) **CYCLODEXTRIN-POLYMERISATE UND VERFAHREN ZU DEREN HERSTELLUNG**
CYCLODEXTRIN POLYMERIZATES AND PROCESS FOR PRODUCING THEM
POLYMERISATS DE CYCLODEXTRINE ET LEUR PROCEDE DE PRODUCTION

(30) Priorität: 27.03.1990 DE 4009840
(43) Veröffentlichungstag der Anmeldung: 03.02.1993
(73) Patentinhaber: Consortium für elektrochemische Industrie GmbH, D-81379 München (DE)
(72) Erfinder: NUSSTEIN, Peter, D-8000 München 50 (DE); STAUDINGER, Günther, D-8000 München 2 (DE); STEINERT, Wolfram, D-8263 Burghausen (DE); KREUZER, Franz-Heinrich, D-8033 Martinsried (DE); SCHMITT-SODY, Wolfgang, D-8190 Wolfratshausen (DE)
(86) Internationale Anmeldenummer: EP9100561
(87) Internationale Veröffentlichungsnummer: WO9114708

(56) Entgegenhaltungen:
- EP-A- 0 146 841
- WO-A-91/01721
- Chemicals Abstracts,vol 111, no.21, 20.11.89(Columbus, Ohio,US), see page 727, abstract 194290y, & JP-A-1106833

## Beschreibung

Die Erfindung betrifft hydrophile, in Wasser quellbare, Cyclodextrinpolymerisate mit hohem Cyclodextringehalt, und ein Verfahren zu deren Herstellung.

Cyclodextrine sind cyclische, nicht reduzierende Oligosaccharide, bestehend aus α-D-Glucoseeinheiten, die ausschließlich 1,4-glucosidisch verknüpft sind. In größeren Mengen sind zur Zeit α-, β- und γ-Cyclodextrin zugänglich, die aus 6, 7 bzw. 8 Anhydroglucoseeinheiten aufgebaut sind. Die interessanteste Eigenschaft der Cyclodextrine ist ihre Fähigkeit zur Ausbildung von Einschlußkomplexen (Wirts-Gast-Verbindungen). Dabei werden hydrophobe Gastmoleküle geeigneter Größe in der Cyclodextrin-Kavität eingeschlossen und durch hydrophobe Wechselwirkungen, van der Waals Kräfte und teilweise auch Wasserstoffbrückenbindungen reversibel gebunden. Auf der Ausbildung dieser Einschlußkomplexe beruhen auch die weitaus meisten Anwendungen von Cyclodextrinen. So eignen sie sich beispielsweise zu chromatographischen Trennungen, als Katalysatoren, als Stabilisatoren, zur Solubilisierung oder zur Überführung von flüssigen Stoffen in den festen Aggregatszustand.

Da Cyclodextrine aufgrund ihrer chiralen C-Atome als enantionselektive Rezeptoren fungieren können, sind unter Beteiligung von Cyclodextrin-Einschlußverbindungen auch chromatographische Trennungen von geeigneten Enantiomeren möglich. Aufgrund dieser selektiven Rezeptoreigenschaften kann durch Cyclodextrine auch die Stereoselektivität von chemischen Reaktionen erhöht werden. Bei der Verwendung von gelöstem Cyclodextrin als Trenn- oder Extraktionsmittel bzw. als Katalysator ist jedoch die Abtrennung der Einschlußverbindung aus dem System und das Freisetzen der eingeschlossenen Verbindung aus dem Cyclodextrin schwierig. Daher ist eine Immobilisierung von Cyclodextrinen unter Erhaltung ihrer Einschlußfähigkeit vorteilhaft. Immobilisierte Cyclodextrine können beispielsweise als stationäre Phase bei Trennprozessen in der Chromatographie Verwendung finden. Bisher wurde eine Immobilisierung von Cyclodextrinen auf unterschiedlichste Weise versucht. Alle vorbeschriebenen Immobilisierungmethoden weisen jedoch Mängel auf.

Unlösliche (immobilisierte) Cyclodextrine und ihre Anwendung in Trennprozessen sind bereits von Solms und Egli beschrieben worden (Helv. Chim. Acta 48, 1225 (1965)). J. Szejtli et al. beschreiben in der deutschen Patentschrift DE 29 27 733 Cyclodextrin-Polyvinylalkohol-Polymere und ein Verfahren zu deren Herstellung. Diese weisen gegenüber den schon vorher bekannten Cyclodextringelen etwas verbesserte mechanische Eigenschaften auf.

P. E. Shaw und C. W. Wilson beschreiben in J. Food Sci. 48, 646, (1983) die Anwendung solcher Cyclodextrin-Polymere zur Abtrennung von Bitterstoffen aus Citrussäften.

A. Ujhazy und J. Szejtli beschreiben in Gordian 89 (3), 43 (1989) ebenfalls die Abtrennung eines Bitterstoffes (Naringin) aus wäßrigen Lösungen mit Hilfe eines Cyclodextrinperlpolymerisats.

Bei den erwähnten schon bekannten Cyclodextringelen wird die Immobilisierung der Cyclodextrine durch bifunktionelle Vernetzerbausteine erreicht. Dabei entsteht ein dreidimensionales, hydrophiles, in Wasser quellbares Cyclodextrinnetzwerk. Mittels einer der inversen Suspensionspolymerisation verwandten Methode kann perlförmiges Material erhalten werden. Als Vernetzerbausteine werden vorzugsweise Epichlorhydrin oder Diepoxyverbindungen eingesetzt. Alle auf diese Weise hergestellten bisher beschriebenen Cyclodextrin-Polymere sind jedoch zur Füllung von Säulen, die bei einem deutlich höheren als Atmosphärendruck betrieben werden, ungeeignet, da bereits bei einem Druck von 3 bar eine derartige Verformung der Füllkörper eintritt, daß die Durchflußraten einer gefüllten Säule niedrig sind. Auch bei einer Druckerhöhung steigen die Durchflußraten wegen der Weichheit des Materials nicht wesentlich an. Hohe Durchflußraten sind jedoch aus Gründen der Wirtschaftlichkeit wünschenswert. Ferner kann man durch eine Druckerhöhung bei gegebenem Säulenfüllmaterial auch eine Erhöhung der Trenneffizienz erreichen.

Um ein cyclodextrinhaltiges Material zu erhalten, das als Säulenfüllmaterial für höhere Drücke geeignet ist, wurde noch ein anderes Verfahren vorgeschlagen, bei dem im Gegensatz zu dem bereits genannten Vorschlag Cyclodextrinmoleküle direkt oder über einen Spacer mit einem druckstabilen, perlförmigen Stammpolymer verbunden werden.

D. W. Armstrong beschreibt in der US-Patentschrift US 4 539 399 die Fixierung von Cyclodextrinen auf Silicagel als Stützmaterial mit Hilfe von Verknüpfungsreagenzien, wie z. B. 3-Glycidoxypropyltrimethoxysilan. Der entscheidende Nachteil dieser Materialien ist ihr niedriger Cyclodextrinanteil. So eignen sich diese Produkte zwar für analytische Zwecke, für einen präparativen Einsatz sind sie aufgrund ihrer geringen Kapazität jedoch völlig ungeeignet.

In der japanischen Patentanmeldung JP 63 314 201 (CA 110 (1989): 175 437 q) wird die Immobilisierung von Cyclodextrinen durch Fixierung auf ein Copolymer beschrieben, das aus einem Glycidylmonovinylester (z. B. Glycidylmethacrylat) oder einem Glycidylmonovinylether (z. B. Allylglycidylether) und Ethylenglykoldimethylacrylat besteht. Die Fixierung der Cyclodextrine erfolgt dabei durch eine HCl-Behandlung des Copolymers bei der die Epoxidringe des Glycidylrestes geöffnet werden und anschließender Umsetzung dieses Zwischenproduktes mit einer basischen Cyclodextrinlösung. Derart hergestellte Materialien besitzen jedoch mehrere Mängel. Neben ihrem niedrigen Cyclodextrinanteil ist auch die Immobilisierungsausbeute bezogen auf β-Cyclodextrin gering. Daneben ist der hohe Anteil an relativ hydrophobem Trägerpolymer ein entscheidender Nachteil. Dieser hohe Anteil an hydrophoben Stellen außerhalb der Cyclodextrinkavitäten führt zu unselektiven Adsorptionen von hydrophoben Substanzen aus der zu behandelnden Lösung. Das hat zur Folge, daß bei der Desorption oder Eluierung diese unselektiv adsorbierten Substanzen mit denjenigen vermischt werden, die selektiv an Cyclodextrineinheiten gebunden waren.

J. Szejtli gibt in "Cyclodextrin Technology" (Kluwer Academic Publishers) 1988, S. 59 ff einen umfassenden Überblick über die bisher beschriebenen Versuche zur Immobilisierung von Cyclodextrinen. Alle diese Versuche, in Wasser quellbare Materialien herzustellen, ergaben jedoch Produkte, die entweder eine nur mäßige mechanische Stabilität aufweisen oder aber einen geringen Cyclodextrinanteil besitzen. In manchen Fällen ist der Herstellungsprozeß zudem so schwierig und teuer, daß eine industrielle Nutzung ausgeschlossen erscheint.

In der JP-A-1-106 833 werden vernetzte Cyclodextrine bzw. Hydroxyalkylcyclodextrine beschrieben und vernetzte Cyclodextrine, welche anschließend mit Ethylenoxid bzw. Propylenoxid umgesetzt werden, beschrieben. Diese Verbindungen werden als Katalysatoren bei der Herstellung von Phenolderivaten eingesetzt.

Die WO-A-91/01721 betrifft die Vernetzung von unsubstituiertem Cyclodextrin sowie die Verwendung der Reaktionsprodukte als Säulenfüllmaterial. Diese Produkte besitzen jedoch nur eine unbefriedigende Druckstabilität.

Aufgabe der Erfindung war es, einfach herzustellende Cyclodextrin-Polymere zu entwickeln, die bei einem hohen Cyclodextrinanteil gleichzeitig verbesserte mechanische Eigenschaften gegenüber den vergleichbaren, bereits bekannten Polymeren besitzen. Die neuen wasserunlöslichen Polymere sollten außerdem hydrophil, und damit in Wasser quellbar, sein.

Gegenstand der Erfindung sind wasserunlösliche und mit bifunktionellen Epoxyverbindungen vernetzte Hydroxyalkylcyclodextrin-Polymerisate, die mit freien C₂-C₄-Hydroxyalkyleinheiten substituiert sind, deren Quellung in Wasser bis zu 1,4 g/g beträgt. In einer bevorzugten Ausführungsform sind die vernetzten Hydroxyalkylcyclodextrin-Polymerisate mit Hydroxypropyleinheiten nachträglich substituiert.

Zur Herstellung dieser vernetzten Hydroxyalkylcyclodextrin-Polymerisate geht man derart vor, daß man Hydroxyalkylcyclodextrinderivate mit bifunktionellen Epoxyverbindungen vernetzt und das so entstandene Polymerisat mit Alkylenoxiden hydroxyalkyliert.

Die eingesetzten Hydroxyalkylcyclodextrine werden üblicherweise durch Umsetzung der jeweiligen Cyclodextrine (α-, β- bzw. γ-Cyclodextrin) mit einem Alkylenoxid in einem basischen, wäßrigen Medium erhalten. Die dabei entstehenden Produktgemische, bestehend aus einer Vielzahl an unterschiedlich subsitutierten Cyclodextrineinheiten, werden üblicherweise mit Hilfe eines MS-Wertes (molarer Substitutionsgrad) charakterisiert. Der MS-Wert gibt dabei an, wie viele Alkylenoxidmoleküle durchschnittlich pro Anhydroglucoseeinheit eines Cyclodextrinmoleküls gebunden sind. Da bei der Reaktion der Cyclodextrine mit Alkylenoxiden im Substituenten jeweils neue OH-Gruppen erzeugt werden, die erneut mit Alkylenoxidmolekülen reagieren können, sind auch MS-Werte größer als 3 möglich.

Die Hydroxyalkylcyclodextrine werden als derartige Produktgemische verwendet. Die Bestimmung der MS-Werte kann dabei mit Hilfe der ¹H-NMR-Spektroskopie durch einfachen Vergleich der entsprechenden Signalflächen von Cyclodextrinsignalen und Substituentensignalen erfolgen. Für die erfindungsgemäßen Perlpolymerisate sind als Edukte Hydroxyalkylcyclodextrine mit mittleren molaren Substituionsgraden von 0,1 bis 2, vorzugsweise 0,4 - 1,5, insbesondere 0,8 - 1,2, geeignet. Besonders geeignete Hydroxyalkylcyclodextrine sind Hydroxyethyl- und Hydroxypropylcyclodextrine.

Zur Herstellung der Cyclodextrinperlpolymerisate geht man derart vor, daß man die Hydroxyalkylcyclodextrinderivate mit bifunktionellen Epoxyverbindungen, wie z. B. Epichlorhydrin, oder Diepoxyverbindungen, wie z. B. Ethylenglykoldiglycidylether, vernetzt. Das Mengenverhältnis in Gew.Teilen Hydroxyalkylcyclodextrin/Epoxyverbindungen beträgt zwischen 2 : 1 und 1 : 2. Die dabei entstehenden Polyether sind sowohl im sauren als auch alkalischen Milieu relativ stabil.

Als Reaktionsmittel für derartige Vernetzungen dient üblicherweise eine alkalische, wäßrige Lösung von Alkalihydroxiden, insbesondere wäßrige Natronlauge. Die geeignete Laugekonzentration hängt dabei vom jeweils verwendeten Vernetzungsmittel ab und beträgt zwischen 5 und 40 %, bei Verwendung von Epichlorhydrin, beträgt sie vorzugsweise 10 - 20 %. Zur Bildung eines Perlpolymerisats dispergiert man die alkalische, wäßrige Lösung eines Hydroxyalkylcyclodextrins (α-, β- oder γ-Cyclodextrinderivat) unter Rühren in einem mit diesem Reaktionsmittel nicht vollständig mischbaren Dispersionsmittel, vorzugsweise einem aliphatischen oder aromatischen Kohlenwasserstoff, z. B. n-Decan oder Toluol. Der Anteil der wäßrigen Phase im Zweiphasen-System beträgt zwischen 15 und 50 Gew.%. Zur Ausbildung von stabilen Zweiphasensystemen, die zudem zu Perlpolymerisaten mit enger Korngrößenverteilung führen, ist die Verwendung von Emulgierungsmitteln erforderlich. Als Emulgatoren werden vorzugsweise ethoxylierte Phosphorsäureester, insbesondere ethoxylierte Phosphorsäureester mit aromatischer Endgruppe eingesetzt. Bezogen auf die Kohlenwasserstoffphase beträgt die Emulgatormenge 0,5 bis 5,0 Gew.%, vorzugsweise 0,5 - 1,5 Gew. %:
Die Konzentration des Hydroxyalkylcyclodextrins in der wäßrigen Reaktionsphase beträgt geeigneterweise 20 - 60 % (w/w), vorzugsweise 25 - 40 %.

Die Polymerisation wird bei Temperaturen zwischen 30 und 100°C durchgeführt. Das Polymerisat wird filtiert, gewaschen und getrocknet.

Zur nachträglichen Einführung der Hydroxyalkylgruppe wird das Polymerisat in einem basischen, wäßrigen Reaktionsmedium mit 10 bis 50 Gew.% Alkylenoxid, beispielsweise Ethylenoxid oder Propylenoxid, bezogen auf das Perlpolymerisat, umgesetzt. Vorzugsweise wird Propylenoxid eingesetzt.

Als Reaktionsmedium eignet sich besonders Natronlauge, wobei das Polymer in einer bevorzugten Ausführungsform mit 0,1 - 20 %iger Natronlauge 30 - 120 min vorgequollen wird, um dann mit dem Alkylenoxid bei geringem Überdruck von maximal 0,5 bar bei 50 - 100°C umgesetzt zu werden. Das Polymerisat wird abfiltriert, gewaschen und getrocknet. Teilchenform und -größe von trockenem Polymer ändern sich dabei kaum.

Überraschenderweise zeigen die auf diese Weise hergestellten Cyclodextrinperlpolymerisate deutlich bessere mechanische Eigenschaften als vergleichbare (gleiche Teilchengröße, gleiches Wasserrückhaltevermögen, gleiches Gelbettvolumen) bisher bekannte Cyclodextrinpolymere. Der Grund für diese nicht erwartete Erhöhung der Druckstabilität liegt in der Verwendung von Hydroxyalkylcyclodextrinen, anstatt von unsubstituierten Cyclodextrinen und in der Anpassung eines üblichen Vernetzungssystems an die speziellen Erfordernisse der vorliegenden Reaktion, insbesondere im Hinblick auf das Emulgatorsystem.

Die erfindungsgemäßen Cyclodextrinperlpolymerisate eignen sich als Säulenfüllmaterial für chromatographische Trennungen von gelösten Substanzen, als Katalysatoren oder zur selektiven Entfernung von hydrophoben Substanzen aus wäßrigen Lösungen.

Die nachfolgenden Beispiele dienen der weiteren Erläuterung der Erfindung:

### Beispiel 1

### Herstellung von Hydroxyethyl-β-Cyclodextrin-Perlpolymer

287 g trockenes Hydroxyethyl-β-Cyclodextrin (MS = 1,0) wurden in 510 g 16 %iger Natronlauge (w/w) gelöst und unter Rühren bei 80°C im Verlauf von 30 min mit 91 g Epichlorhydrin versetzt, wobei die Temperatur der exothermen Reaktion durch Wärmeabfuhr bei 80°C gehalten wurde. Nach beendeter Zugabe des Epichlorhydrins wurde noch 1 h bei 80°C gerührt und dann 115 g 40 %ige Natronlauge zugegeben.

Die auf diese Weise entstandene Lösung eines Hydroxyethylcyclodextrinoligomers wurde nun auf 50°C thermostatisiert und dann unter Rühren zu einer 50°C warmen Lösung, bestehend aus 7,5 g des Dispergiermittels "Gafac RM 510" der Fa. GAF (Deutschland) GmbH, 5020 Frechen (Komplexer Phosphorsäureester) in 805 ml n-Decan, zugegeben. Nach 15 minütiger Emulgierung der Hydroxyethylcyclodextrinoliogmerlösung wurden 144 g Epichlorhydrin rasch zugegeben. Zur endgültigen Vernetzung wurde nun noch 3 h bei 60°C gerührt. Nach Beendigung der Reaktion und Abkühlen auf Raumtemperatur wurde das Perlpolymerisat abfiltriert und mit 150 ml n-Decan, 500 ml Wasser, 500 ml kalter 0,2 n Salzsäure und anschließend destilliertem Wasser gewaschen, bis das Filtrat neutral und chloridfrei war. Nach Trocknung bei 70°C und einem Druck von 100 mbar resultierten 399 g perlförmiges Produkt. Die mittlere Teilchengröße des trockenen Perlpolymerisats lag bei 150 »m, die Quellung in Wasser bei 2,1 g/g und das Gelbettvolumen in Wasser bei 4,0 ml/g. Zur Messung der Druckstabilität des entstandenen Cyclodextringels wurde die Durchflußrate von Wasser durch eine mit dem Gel gefüllte Säule (Füllhöhe: 30 cm, Durchmesser: 2,5 cm) gemessen. Die Durchflußrate betrug 65 ml/min bei einem Druck von 10 bar.

### Beispiel 2

### Hydroxypropylierung von Hydroxyethyl-β-Cyclodextrin-Polymer

In einer geschlossenen Apparatur mit Rührer, Rückflußkühler und Tropftrichter wurden 100 g des in Beispiel 1 beschriebenen Hydroxyethyl-β-Cyclodextrin-Polymers in 300 g 10 %iger Natronlauge (w/w) während 1 Stunde gequollen, anschließend mit 270 g Wasser versetzt und unter Rühren auf 90°C erwärmt. Dann wurden 41,5 g Propylenoxid während 75 min gleichmäßig zugetropft und noch eine Stunde bei 90°C gerührt, wobei sich der anfänglich geringe Überdruck während der Reaktion abbaute. Nach Beendigung der Reaktion wurde abgekühlt, das Polymer abfiltriert, mit 100 ml destilliertem Wasser, 50 ml 0,2 n Salzsäure und wiederum 500 ml destilliertem Wasser gewaschen, bis das Filtrat chloridfrei war und einen neutralen pH-Wert aufwies. Nach Trocknung bei 70°C bei einem Druck von 100 mbar bis zur Gewichtskonstanz wurden 110 g Polymer erhalten.

Die mittlere Teilchengröße des auf diese Weise hergestellten, trockenen hydroxypropylierten Cyclodextrinpolymers lag unverändert bei ca. 150 »m. Die Quellung in Wasser lag bei 1,3 g/g, das Gelbettvolumen bei 3,1 ml/g. Die Durchflußrate (Bestimmung wie in Beispiel 1 beschrieben) betrug 200 ml/min bei einem Druck von 10 bar.

### Beispiel 3

### Herstellung von Hydroxypropyl-β-Cyclodextrin-Perlpolymer

Hydroxypropyl-β-Cyclodextrin-Perlpolymer wurde, wie in Beispiel 1 beschrieben, hergestellt, wobei anstelle des Hydroxyethyl-β-Cyclodextrins (MS = 1,0) ein Hydroxypropyl-β-Cyclodextrin (MS = 1,0) eingesetzt wurde. Es wurden 385 g perlförmiges Polymer mit einem mittleren Teilchendurchmesser von 150 »m erhalten. Die Quellung in Wasser lag bei 2,1 g/g und das Gelbettvolumen bei 4,0 ml/g. Die Durchflußrate betrug 45 ml/min bei einem Druck von 10 bar.

### Beispiel 4

### Hydroxypropylierung von Hydroxypropyl-β-Cyclodextrin-Polymer

100 g eines wie in Beispiel 3 hergestellten Hydroxypropyl-β-Cyclodextrin-Polymers wurden auf die in Beispiel 2 beschriebene Weise mit 41,5 g Propylenoxid umgesetzt. Dabei resultierten 115 g eines Polymers mit einem mittleren Teilchendurchmesser von 155 »m. Die Quellung in Wasser betrug 1,1 g/g und das Gelbettvolumen 3,3 ml/g. Die Durchflußrate betrug 140 ml/min bei einem Druck von 10 bar.

### Beispiel 5

### Herstellung von Hydroxyethyl-α-Cyclodextrin-Polymer

Hydroxyethyl-α-Cyclodextrin-Perlpolymer wurde, wie in Beispiel 1 beschrieben, hergestellt, wobei anstelle des Hydroxyethyl-β-Cyclodextrins (MS = 1,0) ein Hydroxyethyl-α-Cyclodextrin (MS = 1,0) eingesetzt wurde. Es resultierten 370 g eines perlförmigen Polymers mit einem mittleren Teilchendurchmesser von 140 »m. Die Quellung in Wasser lag bei 2,3 g/g und das Gelbettvolumen bei 4,2 ml/g. Die Durchflußrate betrug 50 ml/min bei einem Druck von 10 bar.

### Beispiel 6

### Hydroxypropylierung von Hydroxyethyl-α-Cyclodextrin-Polymer

100 g eines wie in Beispiel 5 hergestellten Hydroxyethyl-α-Cyclodextrin-Polymers wurden auf die in Beispiel 2 beschriebene Weise mit 41,5 g Propylenoxid umgesetzt. Es resultierten 113 g eines Polymers mit einem mittleren Teilchendurchmesser von 140 »m. Die Durchflußrate betrug 130 ml/min bei einem Druck von 10 bar.

### Beispiel 7

### Herstellung von Hydroxyethyl-γ-Cyclodextrin-Polymer

Hydroxyethyl-γ-Cyclodextrin-Perlpolymer wurde, wie in Beispiel 1 beschrieben, hergestellt, wobei anstelle des Hydroxyethyl-β-Cyclodextrins (MS = 1,0) ein Hydroxyethyl-γ-Cyclodextrin (MS = 1,0) eingesetzt wurde. Es resultierten dabei 390 g eines perlförmigen Polymers mit einem mittleren Teilchendurchmesser von 160 »m. Die Quellung in Wasser lag bei 2,1 g/g und das Gelbettvolumen bei 3,9 ml/g. Die Durchflußrate betrug 40 ml/min bei einem Druck von 10 bar.

### Beispiel 8

### Hydroxypropylierung von Hydroxyethyl-γ-Cyclodextrin-Polymer

100 g eines wie in Beispiel 7 hergestellten Hydroxyethyl-γ-Cyclodextrin-Polymers wurden auf die in Beispiel 2 beschriebene Weise mit 41,5 g Propylenoxid umgesetzt. Es resultierten 115 g eines Polymers mit einem mittleren Teilchendurchmesser von 160 »m. Die Quellung in Wasser lag bei 1,4 g/g, das Gelbettvolumen bei 3,4 ml/g. Die Durchflußrate betrug 150 ml/min bei einem Druck von 10 bar.

Zur Messung der mechanischen Eigenschaften wurde die Durchflußrate von Wasser durch eine mit Cyclodextrinpolymerisat gefüllte Säule in Abhängigkeit vom Druck gemessen. Der Durchmesser der Säule betrug 2,5 cm, die Füllhöhe des in Wasser vorgequollenen Cyclodextrinpolymers 30 cm. Um zu gewährleisten, daß die Durchflußrate nicht durch kleine Teilchen, die das Zwischenraumvolumen verstopfen könnten, beeinflußt wird, wurden Teilchen mit einem Durchmesser < 50 »m aus den geprüften Polymeren durch Siebung und Sedimentation abgetrennt. Dieser Feinanteil beträgt bei einer mittleren Teilchengröße von ca. 150 »m üblicherweise weniger als 1 % des Gewichts.

Bei diesen Druckversuchen zeigte sich, daß beispielsweise die von J. Szejtli in DE 29 27 733 beschriebenen Cyclodextrinpolymere, die gegenüber vorher bekannten ähnlichen Polymeren bereits verbesserte mechanische Eigenschaften aufwiesen, bereits bei einem Druck von weniger als 3 bar ihre maximale Durchflußrate aufweisen. Bei weiter steigendem Druck nimmt diese Durchflußrate nicht mehr zu. Die erfindungsgemäßen Cyclodextrinpolymere zeigen dagegen mit zunehmendem Druck einen stetigen Anstieg der Durchflußrate bis etwa 10 bar. Die absoluten Durchflußraten der erfindungsgemäßen Perlpolymere sind darüber hinaus bei einem Druck von 10 bar deutlich höher als bei den nach DE 29 27 733 hergestellten Polymeren. Dabei wurden stets Perlpolymerisate mit gleichem Durchmesser, sowie gleichem Wasserrückhaltevermögen (Quellung) und Gelbettvolumen miteinander verglichen.
Figur 1:
   Durchflußrate eines nach DE 2927733 hergestellten, mit Epichlorhydrin vernetzten β-Cyclodextrinpolymers (Quellung 1.5 g/g; Gelbettvolumen 3.2 ml/g; mittlere Teilchengröße 150 »m).
Figur 2:
   Durchflußrate des Perlpolymers gemäß Beispiel 2 (Quellung 1.3 g/g; Gelbettvolumen 3.1 ml/g; mittlere Teilchengröße 150 »m).

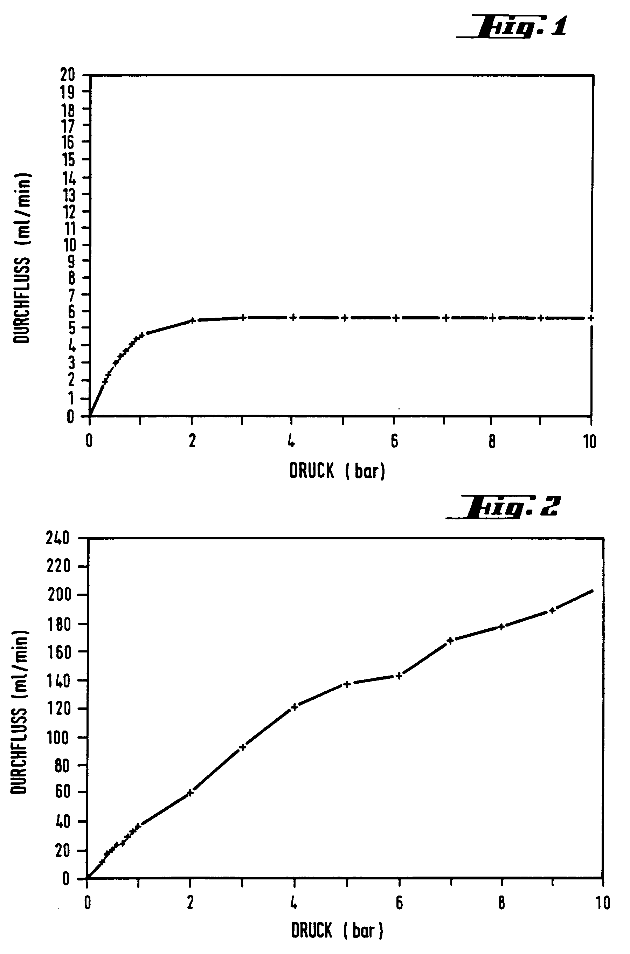

## Patentansprüche

1. Wasserunlösliche und mit bifunktionellen Epoxyverbindungen vernetzte und mit freien C₂-bis C₄-Hydroxyalkyleinheiten substituierte Hydroxyalkylcyclodextrin-Polymerisate, deren Quellung in Wasser bis zu 1,4 g/g beträgt.

2. Hydroxyalkylcyclodextrin-Polymerisate nach Anspruch 1, welche mit freien Hydroxypropylgruppen substituiert sind.

3. Verfahren zur Herstellung von mit C₂-bis C₄-Hydroxyalkyleinheiten substituierten Hydroxyalkylcyclodextrin-Polymerisaten nach Anspruch 1 oder 2, dadurch gekennzeichnet, daß
Hydroxyalkylcyclodextrin mit mittleren molaren Substitionsgraden von 0,1 bis 2,0 mit einer bifunktionellen Epoxyverbindung in einem Mengenverhältnis von 2:1 bis 1:2 Gewichtsteilen in einem zweiphasigen Reaktionsmedium, bestehend aus einer alkalischen, wäßrigen Phase und einer Kohlenwasserstoffphase, bei einer Temperatur von 30 bis 100°C in Gegenwart von 0,5 bis 5,0 Gew.% ethoxyliertem Phosphorsäureester, bezogen auf die Kohlenwasserstoffphase, vernetzt wird, und das Polymerisat in einem alkalischen, wäßrigen Reaktionsmedium mit 10 bis 50 Gew.% Alkylenoxid, bezogen auf das Polymerisat, bei 50 bis 100°C und unter geringem Überdruck von maximal 0,5 bar umgesetzt wird.

4. Verfahren nach Anspruch 3, dadurch gekennzeichnet, daß Hydroxyalkylderivate des α-, β- oder γ-Cyclodextrins eingesetzt werden.

5. Verfahren nach Anspruch 4, dadurch gekennzeichnet, daß Hydroxyethyl- oder Hydroxypropylcyclodextrin eingesetzt wird.

6. Verfahren nach Anspruch 3, 4 oder 5, dadurch gekennzeichnet, daß das als mehrwertiger Vernetzer Epichlorhydrin eingesetzt wird.

7. Verfahren nach Anspruch 3, 4, 5 oder 6, dadurch gekennzeichnet, daß das Hydroxyalkylcyclodextrin-Polymerisat mit Ethylenoxid oder Propylenoxid nachträglich umgesetzt wird.

8. Verwendung der substituierten Hydroxyalkylcyclodextrin-Polymerisate gemäß den obigen Ansprüchen als Säulenfüllmaterial zur chromatographischen Trennung, als Katalysatoren oder zur selektiven Entfernung von hydrophoben Substanzen aus wäßrigen Lösungen.

## Claims

1. Hydroxyalkylcyclodextrin polymers which are insoluble in water and crosslinked with bifunctional epoxy compounds and substituted by free C₂- to C₄-hydroxyalkyl units whose swelling in water is up to 1.4 g/g.

2. Hydroxyalkylcyclodextrin polymers according to Claim 1, which are substituted by free hydroxypropyl groups.

3. Process for the preparation of hydroxyalkylcyclodextrin polymers substituted by C₂- to C₄-hydroxyalkyl units according to Claim 1 or 2, characterized in that hydroxyalkylcyclodextrin having a degree of molar substitution of 0.1 to 2.0 is crosslinked using a bifunctional epoxy compound in a ratio of 2:1 to 1:2 parts by weight in a two-phase reaction medium consisting of an alkaline aqueous phase and a hydrocarbon phase, at a temperature from 30 to 100°C in the presence of 0.5 to 5.0 % by weight of ethoxylated phosphoric acid ester, based on the hydrocarbon phase, and the polymer is reacted in an alkaline aqueous reaction medium with 10 to 50 % by weight of alkylene oxide, based on the polymer, at 50 to 100°C and under a slight overpressure of maximum 0.5 bar.

4. Process according to Claim 3, characterized in that hydroxyalkyl derivatives of α-, β- or γ-cyclodextrin are used.

5. Process according to Claim 4, characterized in that hydroxyethylcyclodextrin or hydroxypropylcyclodextrin is used.

6. Process according to Claim 3, 4 or 5 characterized in that the polyvalent crosslinking agent used is epichlorohydrin.

7. Process according to Claim 3, 4, 5 or 6, characterized in that the hydroxyalkylcyclodextrin polymer is subsequently reacted with ethylene oxide or propylene oxide.

8. Use of the substituted hydroxyalkylcyclodextrin polymer according to the above Claims as a column packing material for chromatographic separation, as a catalyst or for the selective removal of hydrophobic substances from aqueous solutions.

## Revendications

1. Polymères d'hydroxyalkylcyclodextrine insolubles dans l'eau et réticulés avec des composés époxydiques bifonctionnels et substitués par des motifs hydroxyalkyle en C₂ à C₄ libres, polymères dont le gonflement dans l'eau peut aller jusqu'à 1,4 g/g.

2. Polymères d'hydroxyalkylcyclodextrine selon la revendication 1, qui sont substitués par des groupes hydroxypropyle libres.

3. Procédé pour préparer des polymères d'hydroxyalkylcyclodextrine substitués par des motifs hydroxyalkyle en C₂ à C₄ selon les revendications 1 ou 2, caractérisé en ce qu'on réticule une hydroxyalkylcyclodextrine ayant un degré moyen de substitution molaire de 0,1 à 2,0, avec un composé époxydique bifonctionnel, selon un rapport pondéral de 2:1 à 1:2 parties en poids, dans un milieu réactionnel diphasique constitué d'une phase aqueuse alcaline et d'une phase hydrocarbonée, à une température de 30 à 100°C, en présence de 0,5 à 5,0 % en poids d'un ester éthoxylé d'un acide phosphorique, par rapport à la phase hydrocarbonée, et en ce que le polymère est mis à réagir dans un milieu réactionnel aqueux alcalin, avec 10 à 50 % en poids, par rapport au polymère, d'un oxyde d'alkylène, à une température de 50 à 100°C et sous une faible surpression, au maximum de 0,5 bar.

4. Procédé selon la revendication 3, caractérisé en ce qu'on utilise les dérivés hydroxyalkyliques de l'α-, β- ou γ-cyclodextrine.

5. Procédé selon la revendication 4, caractérisé en ce qu'on utilise l'hydroxyéthyl- ou l'hydroxypropylcyclodextrine.

6. Procédé selon les revendications 3, 4 ou 5, caractérisé en ce qu'on utilise de l'épichlorhydrine en tant qu'agent de réticulation polyvalent.

7. Procédé selon les revendications 3, 4, 5 ou 6, caractérisé en ce que le polymère d'hydroxyalkylcyclodextrine est après coup mis à réagir avec de l'oxyde d'éthylène ou de l'oxyde de propylène.

8. Utilisation des polymères d'hydroxyalkylcyclodextrine substituée selon les revendications ci-dessus, en tant que matériau de garnissage de colonne pour la séparation chromatographique, en tant que catalyseur, ou pour assurer l'élimination sélective de substances hydrophobes se trouvant dans des solutions aqueuses.
